# EUROPÄISCHE PATENTSCHRIFT

(11) **EP 2 724 428 B1**
(45) Veröffentlichungstag und Bekanntmachung des Hinweises auf die Patenterteilung: **05.08.2015**
(21) Anmeldenummer: 12721177.9
(22) Anmeldetag: 11.05.2012
(51) Int. Cl.: H01R 39/10

(54) **DYNAMOELEKTRISCHE MASCHINE**
DYNAMO-ELECTRIC MACHINE
MACHINE DYNAMOÉLECTRIQUE

(30) Priorität: 24.06.2011 DE 102011105759
(43) Veröffentlichungstag der Anmeldung: 30.04.2014
(73) Patentinhaber: Kolektor Group D.O.O., 5280 Idrija (SI)
(72) Erfinder: BIZJAK, Franc, 5280 Idrija (SI)
(74) Vertreter: Grättinger Möhring von Poschinger Patentanwälte Partnerschaft
(86) Internationale Anmeldenummer: PCT/EP2012/002026
(87) Internationale Veröffentlichungsnummer: WO 2012/175163

(56) Entgegenhaltungen:
- DE-C- 358 226
- DE-C- 973 236
- DE-U1-202010 002 327
- US-A- 2 623 188
- US-A- 3 396 586

## Beschreibung

Die vorliegende Erfindung betrifft eine dynamoelektrische Maschine, insbesondere einen Fahrzeug-Generator, mit einem Stator und einem relativ zu diesem drehbar gelagerten, eine Rotorwelle aufweisenden Rotor, wobei der Rotor eine stromdurchflossene Rotorwicklung umfasst, die über eine Schleifringanordnung mit dem Stator zugeordneten Anschlüssen unterbrechungsfrei elektrisch leitend verbunden ist.

Fahrzeug-Generatoren, auf die die vorliegende Erfindung primär gerichtet ist, sind typischerweise als Klauenpol-Drehstromlichtmaschinen ausgeführt. Der bei Drehung des Rotors in der Rotorwicklung induzierte Strom wird dabei typischerweise auf zwei endseitig an der Rotorwelle angeordnete, mit der Rotorwicklung verbundene zylindrische Schleifringe geleitet, von wo er über sogenannte "Bürsten" einer Gleichrichter- und Regleranordnung zugeleitet wird. Eine solche übliche Generator-Bauweise wird in diversen Publikationen beschrieben und vorausgesetzt, so beispielsweise in der DE 10113673 A1, der DE 4430073 A1, der EP 1311051 A2, der EP 671802 A1, der US 2005/0127777 A1, der EP 1337013 A2 und der US 7417353 B2. Im Hinblick auf die Übertragung des in der Rotorwicklung induzierten Stroms auf den Stator wurden auch bereits, allerdings ohne kommerziellen Erfolg, Alternativen vorgeschlagen, so beispielsweise in der GB 1138526 die Übertragung mittels einer "Schleifringanordnung" mit ebenen Bürstenlaufflächen mit einer ersten zentralen Kontaktfläche und einer diese ringförmig umgebenden zweiten Kontaktfläche sowie in der DE 2926294 A die Übertragung mittels zweier beidseits an einem Träger angeordneter Rotorschleifringe mit ebenen Kontakt-Stirnflächen, an denen jeweils eine Bürste axial anliegt. Ebenfalls vorgeschlagen wurde für die Stromübertragung zwischen Rotor und Stator einer elektrischen Maschine eine Schleifringanordnung, bei der ein Rotorschleifring ständig an einem diesem axial gegenüberstehenden Statorschleifring anliegt (DE 973236). Eine Axial-Schleitringanordnung zur Stromübertragung in dynamoelektrischen Maschinen ist auch in der US 2623188 beschrieben.

Schleifringanordnungen als solche sind im übrigen nicht nur zur Übertragung von in der Rotorwicklung eines Generators induzierten Strömen auf den Stator des Generators bekannt, sondern auch im Zusammenhang mit der Signalübertragung. Eine solche der Signalübertragung dienende Schleifringanordnung ist beispielsweise der US 4275376 entnehmbar.

Eine dynamoelektrische Maschine gemäss den Oberbegriff des Anspruches 1 ist auch Gegenstand der DE 20 2010 002327 U1. Für eine zwei Paare von Schleifringen aufweisende Schleifringanordnung wird dabei eine wechselnde Abfolge von Rotor- und Statorschleifringen vorgeschlagen, d.h. eine Abfolge erster Rotorschleifring, erster Statorschleifring, zweiter Rotorschleifring, zweiter Statorschleifring, jeweils samt zugehöriger Tragstruktur. Der Stapel aus den vier Schleifringen ist dabei zwischen einem Bund des Rotors und einer auf diesen aufgeschraubten Wellenmutter angeordnet und fixiert.

Für eine mindestens drei Paare von Schleifringen aufweisende Schleifringanordnung wird vorgeschlagen, an einander benachbarten Rotor-Schleifringträgern und Stator-Schleifringträgern einander gegenüberliegend jeweils zwei Schleifringe anzuordnen. Dies ergibt die Abfolge erster Statorschleifring, erster und zweiter Rotorschleifring, zweiter und dritter Statorschleifring, dritter Rotorschleifring.

Trotz der diversen Versuche, dynamoelektrische Maschinen der eingangs angegebenen Art im Hinblick auf den Anschluss der stromdurchflossenen Rotorwicklung an den Stator zu optimieren, existiert nach wie vor ein Bedarf für eine praxistaugliche, kommerziell einsetzbare Lösung, die eine langlebige, zuverlässige, kostengünstige, kompakte dynamoelektrische Maschine der eingangs angegebenen Art bereitstellt.

Gelöst wird diese Aufgabenstellung gemäß der vorliegenden Erfindung durch eine dynamoelektrische Maschine, insbesondere einen Fahrzeug-Generator, mit einem Stator und einem relativ zu diesem drehbar gelagerten, eine Rotorwelle aufweisenden Rotor, wobei der Rotor eine stromdurchflossene Rotorwicklung umfasst, die über eine Schleifringanordnung mit dem Stator zugeordneten Anschlüssen unterbrechungsfrei elektrisch leitend verbunden ist, wobei die Schleifringanordnung genau zwei Paare von Schleifringen umfasst, jedes Schleifringpaar einen Statorschleifring und einen Rotorschleifring umfasst, jeweils der Statorschleifring und der zugeordnete Rotorschleifring ständig in einer ringförmigen, kegelstumpfförmigen Kontaktzone aneinander anliegen, die beiden Rotorschleifringe zwischen den beiden Statorschleifringen angeordnet sind, jeder Rotorschleifring an einer mit der Rotorwelle drehfest verbundenen Rotorträgerscheibe angeordnet ist und die beiden Statorschleifringe in axialer Richtung zueinander lageveränderbar sind.

Die erfindungsgemäße dynamoelektrische Maschine zeichnet sich somit durch eine Vielzahl spezifischer miteinander kombinierter, funktional zusammenwirkender Besonderheiten aus, die in ihrer Wechselwirkung zu dem angestrebten Ergebnis, nämlich einer langlebigen, wirtschaftlichen, zuverlässigen kompakten dynamoelektrischen Maschine führen. Die vergleichsweise großen für die Stromübertragung zwischen Rotor und Stator zur Verfügung stehenden Kontaktflächen resultieren in einer vergleichsweise geringen elektrischen Flussdichte, was wiederum beim Stand der Technik bestehende thermische Probleme reduziert bzw. eliminiert. Auch die Verschleißproblematik wird durch die vorliegende Erfindung entschärft mit der Folge einer entsprechend hohen Lebensdauer. Der ständige Kontakt jeweils eines Statorschleifrings mit einem Rotorschleifring im Bereich einer kegelstumpfförmigen ringförmigen Kontaktzone trägt weiterhin dazu bei, gegenüber dem verbreitet eingesetzten, Bürsten verwendenden Stand der Technik den Stromfluß zu vergleichmäßigen, weil keinerlei sich während der Drehung des Rotors ändernde innere Widerstände vorliegen. Auch bleiben mechanische Schwingungen des Rotors, wie sie insbesondere bei nach längerer Betriebszeit durch ausgeschlagene Lager auftreten können, weitgehend folgenlos für die Qualität der Stromübertragung. Die kegelstumpfförmige Ausführung der Kontaktzonen bewirkt selbstzentrierende Effekte zwischen den beiden jeweils aneinander anliegenden Schleifringen eines jeden Paares. Die Konzentration des Verschleißausgleichs in den Stator, indem die beiden Statorschleifringe in axialer Richtung zueinander lageveränderbar sind, macht jeglichen rotierenden Verschleißausgleich überflüssig, wobei sich durch die Anordnung der beiden Rotorschleifringe zwischen den beiden Statorschleifringen weiterhin sowohl eine besonders kompakte Bauweise als auch ein apparativ besonders einfacher Verschleißausgleich realisieren lassen. Weitere Vorteile der erfindungsgemäßen elektrodynamischen Maschine werden durch die nachfolgende Beschreibung und Erläuterung besonders bevorzugter Weiterbildungen und Ausführungsbeispiele erkennbar.

Im Rahmen der vorliegenden Erfindung können die jeweils zwischen einem Rotorschleifring und dem zugeordneten Statorschleifring bestehenden ringförmigen kegelstumpfförmigen Kontaktzonen unterschiedlich ausgeführt sein. Bei einer ersten Weiterbildung der Erfindung beträgt der doppelte Kegelwinkel der Kontaktflächen zwischen 170° und 140°. In diesem Fall wirken sich mögliche nachteilige Effekte durch Rotorschwingungen (s.o.) noch nicht im nennenswerten Umfang nachteilig auf die Qualität der Stromübertragung aus. Auch ist in diesem Falle die Vergrößerung der axialen Baulänge der Schleifringanordnung, verglichen mit ebenen Kontaktzonen, nahezu vernachlässigbar, jedenfalls sehr gering.

Gemäß einer anderen bevorzugten Weiterbildung ist vorgesehen, dass die Kontaktzonen der beiden Schleifringpaare übereinstimmend ausgeführt sind, d.h. insbesondere auf demselben Radius liegen. Besonders günstig ist es dabei, wenn die Kontaktzonen der beiden Schleifringpaare - bei kegelstumpfförmiger Ausführung der Kontaktzonen - spiegelbildlich zueinander orientiert sind. Unter Gesichtspunkten der Schwingungsdynamik ist dabei besonders günstig, wenn - bei kegelstumpfförmiger Ausführung der Kontaktzonen - die Kegel, auf denen die Kontaktzonen liegen, einander mit ihren Spitzen gegenüberstehen. Der Abstand der Spitzen der besagten Kegel zueinander sollte dabei im Bereich etwa des 0,5-fachen bis 2-fachen des mittleren Radius' der Kontaktzonen liegen.

Die Rotorträgerscheibe(n) ist/sind bevorzugt aus einem elektrisch isolierenden Material ausgeführt. Namentlich dann, wenn die Rotorschleifringe aus Graphit bestehen (siehe unten), sind sie bevorzugt über jeweils eine metallische Rotoranschlußscheibe mit der Rotorträgerscheibe verbunden. Mit der Rotoranschlußscheibe ist dabei wiederum besonders bevorzugt jeweils ein sich im wesentlichen parallel zur Rotorachse erstreckender Anschluß verbunden, der insbesondere in einer sich parallel zur Rotorachse erstreckenden Nut in der Rotorwelle verlegt sein kann. Endseitig sind die besagten Anschlüsse bevorzugt über Endklammern mit der Rotorwicklung kontaktiert. In der betreffenden Kontaktierungszone erstrecken sich die Anschlüsse und die Enden der Rotorwicklung dabei besonders bevorzugt zueinander parallel in radialer Richtung. Dies ist günstig, um die Auswirkungen der Zentrifugalkraft auf die Kontaktierung der Anschlüsse mit der Rotorwicklung zu minimieren.

Eine abermals andere besonders bevorzugte Weiterbildung der Erfindung zeichnet sich dadurch aus, dass eine gemeinsame Rotorträgerscheibe vorgesehen ist, an der die beiden Rotorschleifringe beidseits an einander gegenüberliegenden Stirnseiten angeordnet sind. Die Anbringung der beiden Rotorschleifringe an einer gemeinsamen Rotorträgerscheibe ist dabei geeignet, zu einer Minimierung der axialen Baulänge der Schleifringanordnung beizutragen. Die gemeinsame Rotorträgerscheibe kann dabei insbesondere radial nach außen von einem hülsenförmigen Bauteil abstehen, welches auf die Rotorwelle aufzuschieben und gegenüber dieser dreh- und axialfest gesichert ist.

Weiter oben wurde bereits erwähnt, dass die Rotorschleifringe bevorzugt aus Graphitmaterial bestehen. Besonders bevorzugt bestehen auch die Statorschleifringe aus Graphitmaterial. Besonders günstig ist es dabei, wenn die Rotorschleifringe und die Statorschleifringe aus unterschiedlichem Graphitmaterial bestehen, wobei die betreffende Materialpaarung auf das Laufverhalten, das Abriebverhalten und insbesondere das Stromübertragungsverhalten optimal abgestimmt ist. Je nach der individuellen Materialpaarung kann es dabei günstig sein, wenn die Kontaktzonen benetzt sind, was insbesondere dadurch erfolgen kann, dass die Rotorschleifringe und/oder die Statorschleifringe in Benetzungsflüssigkeit eintauchen. Die besagte Benetzungsflüssigkeit ist dabei in einem Gehäuse aufgenommen, welches die Schleifringanordnung umgibt.

Ein solches die Schleifringanordnung umgebendes Gehäuse eignet sich, gemäß einer abermals anderen bevorzugten Weiterbildung der Erfindung, auch für die Lagerung der Statorschleifringe, insbesondere indem jeder Statorschleifring mit einer zugeordneten, in dem die Schleifringanordnung umgebenden Gehäuse drehfest gelagerten Statorträgerscheibe fest verbunden ist. Die besagten Statorträgerscheiben können dabei bevorzugt aus einem isolierenden Material bestehen, wobei bevorzugt die Statorschleifringe über jeweils eine metallische, jeweils einen Anschlußpunkt aufweisende Statoranschlußscheibe mit der zugeordneten Statorträgerscheibe verbunden sind.

Im Hinblick auf einen Verschleißausgleich ist dabei bevorzugt zumindest eine der Statorträgerscheiben in dem Gehäuse axial verschiebbar geführt. Besonders bevorzugt ist allerdings eine der beiden Statorträgerscheiben lagefest an dem Gehäuse angeordnet, und zwar idealerweise die der Rotorwicklung am nächsten liegende Statorträgerscheibe. Denn auf diese Weise resultiert ein Verschleiß an den Schleifringen in einer axialen Verlagerung des Gehäuses weg von der Rotorwicklung, d.h. in Richtung auf das freie Ende der Rotorwelle, so dass insbesondere selbst bei extremem Verschleiß ein Anstoßen des Gehäuses an dem benachbarten Rotorlager ausgeschlossen ist.

Die Anlagekraft, mit welcher die aneinander anliegenden Schleifringe der beiden Schleifringpaare gegeneinander gedrückt werden, wird besonders bevorzugt von einer gemeinsamen Federanordnung bereitgestellt, so dass insbesondere die beiden Statorschleifringe mittels der besagten gemeinsamen Federanordnung axial gegen den jeweils zugeordneten Rotorschleifring vorgespannt sind. Eine solche gemeinsame Federanordnung hat insbesondere den Vorteil, dass bei den beiden Schleifringpaaren identische Vorspannkräfte wirken, so dass sich insbesondere bei beiden Schleifringpaaren im wesentlichen der identische Verschleiß einstellt, ein ungleichmäßiger Verschleiß somit vermieden wird. Die besagte Federanordnung kann dabei insbesondere eine Mehrzahl von gleichmäßig um die Rotorachse herum angeordneten Druckfedern umfassen.

Gemäß einer wiederum anderen bevorzugten Weiterbildung der Erfindung ist vorgesehen, dass an dem Gehäuse ein Entladungsanschluß angeordnet ist, welcher mit einem elastisch gegen die Rotorwelle oder einen an der Rotorwelle angebrachten Gegenkontakt vorgespannten Entladungskontakt verbunden ist. Der besagte Entladungskontakt kann dabei insbesondere stirnseitig im Bereich der Rotorachse an der Rotorwelle bzw. dem Gegenkontakt anliegen. Ein solcher Entladungsanschluß verhindert namentlich die elektrostatische Aufladung des Rotors und Probleme, die durch eine solche elektrostatische Aufladung des Rotors verursacht werden können. Er trägt auf diese Weise maßgeblich zur weiteren Steigerung der Zuverlässigkeit der erfindungsgemäßen dynamoelektrischen Maschine bei.

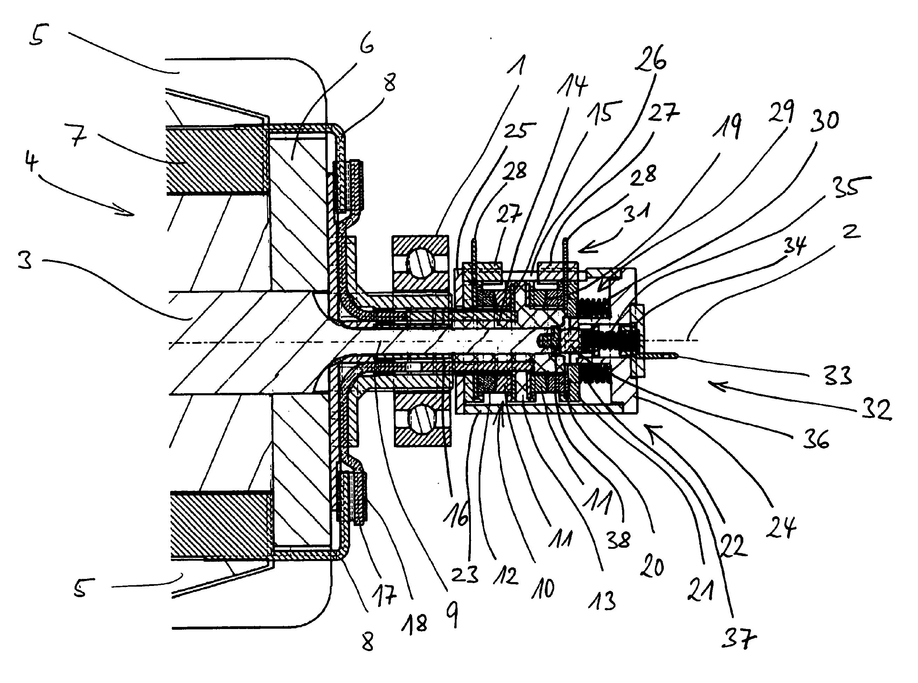

Im Folgenden wird die vorliegende Erfindung anhand eines in der Zeichnung veranschaulichten bevorzugten Ausführungsbeispiels näher erläutert. Dabei zeigt die Zeichnung in dem hier interessierenden Bereich einen Axialschnitt durch eine erfindungsgemäß ausgeführte dynamoelektrische Maschine in Form eines Fahrzeug-Generators.

Der Fahrzeug-Generator umfasst in als solches bekannter Weise einen über Lager 1 in einem Stator um die Achse 2 drehbar gelagerten, eine Rotorwelle 3 aufweisenden Rotor 4. Dieser umfasst in weiterhin bekannter Weise zwei in Klauenpolen 5 auslaufende Polscheiben 6 und eine dazwischen angeordnete stromdurchflossene Rotorwicklung 7 mit zwei Wicklungsenden 8. Da der Fahrzeug-Generator in diesem Umfang dem hinlänglich bekannten Stand der Technik entspricht, erübrigen sich weitergehende Erläuterungen.

Die Rotorwelle 3 läuft in einem das Lager 1 durchsetzenden Wellenzapfen 9 aus. Im Bereich dieses Wellenzapfens 9 ist eine Schleifringanordnung 10 vorgesehen. Diese umfasst zwei Paare von Schleifringen, welche jeweils einen Rotorschleifring 11 und einen Statorschleifring 12 umfassen. Die beiden Rotorschleifringe 11 sind dabei beidseits an einander gegenüberliegenden Stirnseiten an einer dreh- und axialfest mit der Rotorwelle 3 verbundenen, gemeinsamen Rotorträgerscheibe 13 angeordnet. Die Rotorträgerscheibe 13 bildet dabei einen radial vorspringenden Bund einer fest auf den Wellenzapfen 9 aufgesetzten, aus einem isolierenden Werkstoff gefertigten Hülse 14. Die beiden aus Graphitmaterial bestehenden Rotorschleifringe 11 sind dabei über jeweils eine metallische Rotoranschlussscheibe 15 mit der gemeinsamen Rotorträgerscheibe 13 verbunden. Mit jeder der Rotoranschlussscheiben 15 ist ein sich im Wesentlichen parallel zur Rotorachse 2 erstrechender Anschluss 16 verbunden, der im Bereich eines im Wesentlichen radial orientierten Endabschnitts 17 über eine Endklammer 18 mit einem Wicklungsende 8 der Rotorwicklung 7 kontaktiert ist.

Die beiden Statorschleifringe 12, die ebenfalls aus einem Graphitmaterial bestehen und zwischen denen die beiden Rotorschleifringe 11 angeordnet sind, sind in dem Sinne dem Stator zugeordnet, als sie nicht rotieren. Dabei liegen jeweils der Statorschleifring 12 und der zugeordnete Rotorschleifring 11 ständig in einer ringförmigen, kegelstumpfförmig ausgeführten Kontaktzone 19 aneinander an. Die Kontaktzonen 19 der beiden Schleifringpaare sind dabei übereinstimmend ausgeführt mit zueinander spiegelbildlicher Orientierung dergestalt, dass die Spitzen der Kegel, auf denen die Kontaktzonen 19 liegen, gegeneinander gerichtet sind. Der doppelte Kegelwinkel der beiden kegelstumpfförmig ausgeführten Kontaktzonen 19 beträgt etwa 155°.

Jeder der beiden Statorschleifringe 12 ist über eine metallische Statoranschlussscheibe 20 mit einer zugeordneten, aus einem isolierenden Werkstoff bestehenden Statorträgerscheibe 21 fest verbunden. Die beiden Statorträgerscheiben 21 sind drehfest in einem die beiden Schleifringpaare umgebenden, nicht-rotierenden Gehäuse 22 gelagert. Das Gehäuse 22 umfasst dabei einen Mantelabschnitt 23, einen äußeren Deckel 24 und einen - dem Lager 1 benachbarten - inneren Deckel 25. Der Mantelabschnitt 23 weist dabei eine schlitzförmige Aussparung 26 auf, in welcher - zum Zwecke der Verdrehsicherung von Gehäuse 22 und Statorträgerscheiben 21 relativ zueinander - Gleitstücke 27 der Statorträgerscheiben 21 geführt sind. Jedes der beiden Gleitstücke 27 ist dabei von einer Anschlussfahne 28 durchsetzt, welche an der jeweils zugeordneten Statoranschlussscheibe 20 angeformt ist.

Die beiden Statorschleifringe 12 sind mittels einer gemeinsamen Federanordnung 29 axial gegen den jeweils zugeordneten Rotorschleifring 11 vorgespannt. Hierzu umfasst die Federanordnung 29 eine Mehrzahl von gleichmäßig im die Rotorachse 2 herum angeordneten Druckfedern 30, die sich einerseits an dem äußeren Deckel 24 und andererseits an der diesem benachbarten, d.h. der in der Zeichnung rechts dargestellten Statorträgerscheibe 21 abstützen. Indem einerseits die betreffende (rechts dargestellte) Statorträgerscheibe 21 in dem Gehäuse 22 axial verschiebbar geführt und andererseits das Gehäuse 22 selbst an der weiteren Statorstruktur axial schwimmend abgestützt ist, wird auch bei dem in der Zeichnung links gezeigten, d.h. dem Lager 1 nächstliegenden Schleifringpaar der Rotorschleifring 11 durch die Vorspannkraft der Druckfedern 30 gegen den zugeordneten Statorschleifring 12 vorgespannt. Hierzu ist die Statorträgerscheibe 21 des linken, lagernahen Schleifringpaares in dem Sinne lagefest an dem Gehäuse 22 angeordnet, als sie an dem inneren Deckel 25 anliegt.

Auf die vorstehend im Einzelnen beschriebene Art und Weise ist somit die Rotorwicklung 7 ständig und unterbrechungsfrei elektrisch leitend mit dem Stator zugeordneten, d.h. nicht-rotierenden Anschlüssen 31 verbunden.

Weiterhin ist an dem Gehäuse 22 ein Entladungsanschluss 32 vorgesehen. Dieser umfasst ein an dem äußeren Deckel 24 des Gehäuses 22 angeordnetes, eine Anschlussfahne 33 aufweisendes Anschlussstück 34, an dem sich über eine koaxial zur Rotationsachse 2 angeordnete Vorspannfeder 35 ein Entladungskontakt 36 abstützt. Dieser ist in einer an dem äußeren Deckel 24 des Gehäuses 22 angeformten Führungshülse 37 axial verschiebbar geführt und aufgrund der Vorspannfeder 35 elastisch gegen einen endseitig an dem Wellenzapfen 9 angebrachten Gegenkontakt 38 vorgespannt. Auch der Entladungskontakt 36 und der Gegenkontakt 38 bestehen aus Graphitmaterial.

## Patentansprüche

1. Dynamoelektrische Maschine, insbesondere Fahrzeug-Generator, mit einem Stator und einem relativ zu diesem drehbar gelagerten, eine Rotorwelle (3) aufweisenden Rotor (4), wobei der Rotor eine stromdurchflossene Rotorwicklung (7) umfasst, die über eine Schleifringanordnung (10) mit dem Stator zugeordneten Anschlüssen (31) unterbrechungsfrei elektrisch leitend verbunden ist, wobei
- die Schleifringanordnung genau zwei Paare von Schleifringen umfasst,
- jedes Schleifringpaar einen Statorschleifring (12) und einen Rotorschleifring (11) umfasst,
- jeweils der Statorschleifring und der zugeordnete Rotorschleifring ständig in einer ringförmigen Kontaktzone (19) aneinander anliegen,
- jeder Rotorschleifring an einer mit der Rotorwelle (3) drehfest verbundenen Rotorträgerscheibe (13) angeordnet ist und ist **dadurch gekennzeichnet, dass**
- jeweils der Statorschleifring (12) und der zugeordnete Rotorschleifring (11) ständig in einer ringförmigen, kegelstampfförmigen Kontaktzone (19) aneinander Anliegen und dass
- die beiden Rotorschleifringe (11) zwischen den beiden Statorschleifringen (12) angeordnet sind, und dass
- die beiden Statorschleifringe (12) in axialer Richtung zueinander lageveränderbar sind.

2. Dynamoelektrische Maschine nach Anspruch 1,
**dadurch gekennzeichnet, dass** die Kontaktzonen (19) der beiden Schleifringpaare übereinstimmend ausgeführt, bevorzugt zueinander spiegelbildlich orientiert sind.

3. Dynamoelektrische Maschine nach Anspruch 1 oder Anspruch 2, **dadurch gekennzeichnet, dass** die Rotorschleifringe (11) über jeweils eine metallische Rotoranschlussscheibe (15) mit der Rotorträgerscheibe (13) verbunden sind.

4. Dynamoelektrische Maschine nach Anspruch 3,
**dadurch gekennzeichnet, dass** mit jeder Rotoranschlussscheibe (15) jeweils ein sich zumindest bereichsweise im Wesentlichen parallel zur Rotorachse (2) erstreckender Anschluss (16) verbunden ist.

5. Dynamoelektrische Maschine nach Anspruch 4,
**dadurch gekennzeichnet, dass** die Rotorwicklung (7) mit Endklammern (18) mit den Anschlüssen (16) kontaktiert ist.

6. Dynamoelektrische Maschine nach einem der Ansprüche 1 bis 5, **dadurch gekennzeichnet, dass** eine gemeinsame Rotorträgerscheibe (13) vorgesehen ist, an der die beiden Rotorschleifringe (11) beidseits an einander gegenüberliegenden Stirnseiten angeordnet sind.

7. Dynamoelektrische Maschine nach einem der Ansprüche 1 bis 6, **dadurch gekennzeichnet, dass** die Rotorschleifringe (11) und/oder die Statorschleifringe (12) aus einem Graphitmaterial bestehen.

8. Dynamoelektrische Maschine nach Anspruch 7,
**dadurch gekennzeichnet, dass** die Rotorschleifringe (11) und die Statorschleifringe (12) aus unterschiedlichem Graphitmaterial bestehen

9. Dynamoelektrische Maschine nach einem der Ansprüche 1 bis 8, **dadurch gekennzeichnet, dass** die Kontaktzonen (19) benetzt sind, insbesondere indem die Rotorschleifringe und/oder die Statorschleifringe in Benetzungsflüssigkeit eintauchen.

10. Dynamoelektrische Maschine nach einem der Ansprüche 1 bis 9, **dadurch gekennzeichnet, dass** jeder Statorschleifring (12) mit einer zugeordneten, in einem die Schleifringanordnung (10) umgebenden Gehäuse (22) drehfest gelagerten Statorträgerscheibe (21) fest verbunden ist.

11. Dynamoelektrische Maschine nach Anspruch 10, **dadurch gekennzeichnet, dass** die Statorschleifringe (12) über jeweils eine metallische, jeweils einen Anschluss (31) aufweisende Statoranschlussscheibe (20) mit der zugeordneten Statorträgerscheibe (21) verbunden sind.

12. Dynamoelektrische Maschine nach Anspruch 10 oder Anspruch 11, **dadurch gekennzeichnet, dass** zumindest eine der Statorträgerscheiben (21) in dem Gehäuse (22) axial verschiebbar geführt ist.

13. Dynamoelektrische Maschine nach einem der Ansprüche 10 bis 12, **dadurch gekennzeichnet, dass** eine Statorträgerscheibe (21) lagefest an dem Gehäuse (22) angeordnet ist.

14. Dynamoelektrische Maschine nach Anspruch 13,
**dadurch gekennzeichnet, dass** die beiden Statorschleifringe (12) mittels einer gemeinsamen Federanordnung (29) axial gegen den jeweils zugeordneten Rotorschleifring (11) vorgespannt sind.

15. Dynamoelektrische Maschine nach Anspruch 14,
**dadurch gekennzeichnet, dass** die Federanordnung (29) eine Mehrzahl von gleichmäßig im die Rotorachse (2) herum angeordneten Druckfedern (30) umfasst.

16. Dynamoelektrische Maschine nach einem der Ansprüche 1 bis 15, **dadurch gekennzeichnet, dass** an dem Gehäuse (22) ein Entladungsanschluss (32) angeordnet ist, welcher mit einem elastisch gegen die Rotorwelle (3) oder einen an der Rotorwelle angebrachten Gegenkontakt (38) vorgespannten Entladungskontakt (36) verbunden ist.

17. Dynamoelektrische Maschine nach Anspruch 16, **dadurch gekennzeichnet, dass** der Entladungskontakt (36) stirnseitig im Bereich der Rotorachse (2) an der Rotorwelle (3) bzw. dem Gegenkontakt (38) anliegt.

## Claims

1. A dynamo-electric machine, particularly a vehicle generator, with a stator and a rotor (4) having a rotor shaft (3), which rotor is mounted rotatably relatively to the stator, wherein the rotor comprises a rotor winding (7), through which current flows and which is electrically conductively connected without interruption via a slip ring arrangement (10) to terminals (31) associated with the stator, wherein
- the slip ring arrangement comprises exactly two pairs of slip rings,
- each slip ring pair comprises a stator slip ring (12) and a rotor slip ring (11),
- in each case the stator slip ring and the associated rotor slip ring constantly bear against one another in an annular contact zone (19),
- each rotor slip ring is arranged on a rotor carrier disc (13) connected to the rotor shaft (3) in a rotationally fixed manner and
is **characterised in that**
- in each case the stator slip ring (12) and the associated rotor slip ring (11) constantly bear against one another in an annular, truncated-cone-shaped contact zone (19), and **in that**
- the two rotor slip rings (11) are arranged between the two stator slip rings (12), and **in that**
- the two stator slip rings (12) can change position relatively to one another in the axial direction.

2. The dynamo-electric machine according to Claim 1, **characterised in that** the contact zones (19) of the two slip ring pairs are realised in a matching manner, preferably are orientated in a mirror-inverted manner with respect to one another.

3. The dynamo-electric machine according to Claim 1 or Claim 2, **characterised in that** the rotor slip rings (11) are connected to the rotor carrier disc (13) via one metallic rotor connection washer (15) in each case.

4. The dynamo-electric machine according to Claim 3, **characterised in that** a terminal (16) extending essentially parallel to the rotor axis (2) at least in certain areas is connected to each rotor connection washer (15) in each case.

5. The dynamo-electric machine according to Claim 4, **characterised in that** the rotor winding (7) is in contact with the terminals (16) using end clamps (18).

6. The dynamo-electric machine according to one of Claims 1 to 5, **characterised in that** a common rotor carrier disc (13) is provided, on which the two rotor slip rings (11) are arranged on both sides on mutually opposite end faces.

7. The dynamo-electric machine according to one of Claims 1 to 6, **characterised in that** the rotor slip rings (11) and/or the stator slip rings (12) consist of a graphite material.

8. The dynamo-electric machine according to Claim 7, **characterised in that** the rotor slip rings (11) and the stator slip rings (12) consist of different graphite material.

9. The dynamo-electric machine according to one of Claims 1 to 8, **characterised in that** the contact zones (19) are wettened, particularly by dipping the rotor slip rings and/or the stator slip rings into wetting fluid.

10. The dynamo-electric machine according to one of Claims 1 to 9, **characterised in that** each stator slip ring (12) is securely connected to an associated stator carrier disc (21), which is mounted in a rotationally-fixed manner in a housing (22) surrounding the slip ring arrangement (10).

11. The dynamo-electric machine according to Claim 10, **characterised in that** the stator slip rings (12) are connected via in each case one metallic stator connection washer (20), having one connection (31) in each case, to the associated stator carrier disc (21).

12. The dynamo-electric machine according to Claim 10 or Claim 11, **characterised in that** at least one of the stator carrier discs (21) is axially displaceablely guided in the housing (22).

13. The dynamo-electric machine according to one of Claims 10 to 12, **characterised in that** a stator carrier disc (21) is arranged in a positionally fixed manner on the housing (22).

14. The dynamo-electric machine according to Claim 13, **characterised in that** the two stator slip rings (12) are axially prestressed against the respectively associated rotor slip ring (11) by means of a common spring arrangement (29).

15. The dynamo-electric machine according to Claim 14, **characterised in that** the spring arrangement (29) comprises a plurality of pressure springs (30) arranged evenly around the rotor axis (2).

16. The dynamo-electric machine according to one of Claims 1 to 15, **characterised in that** a discharge terminal (32) is arranged on the housing (22), which is connected to a discharge contact (36) prestressed elastically against the rotor shaft (3) or a counter contact (38) attached on the rotor shaft.

17. The dynamo-electric machine according to Claim 16, **characterised in that** the discharge contact (36) bears against the rotor shaft (3) or the counter contact (38) at the end in the region of the rotor axis (2).

## Revendications

1. Machine dynamoélectrique, en particulier alternateur de véhicule, avec un stator et un rotor (4) comportant un arbre de rotor (3) logé de manière à pouvoir tourner par rapport à celui-ci, pour laquelle le rotor comprend un enroulement rotorique (7) traversé par le courant qui est relié de façon électroconductrice sans interruption par un montage à bagues collectrices (10) à des connexions (31) affectées au stator, pour laquelle
- le montage à bagues collectrices comprend exactement deux paires de bagues collectrices,
- chaque paire de bagues collectrices comprend une bague collectrice de stator (12) et une bague collectrice de rotor (11),
- la bague collectrice de stator et la bague collectrice de rotor attribuée sont respectivement disposées l'une à côté de l'autre en permanence dans une zone de contact de forme annulaire (19),
- chaque bague collectrice de rotor est disposée sur un plateau porte-rotor (13) relié sans rotation à l'arbre de rotor (3) et
est **caractérisée en ce que**
- la bague collectrice de stator (12) et la bague collectrice de rotor attribuée (11) sont respectivement disposées l'une à côté de l'autre en permanence dans une zone de contact de forme annulaire, de forme tronconique (19) et **en ce que**
- les deux bagues collectrices de rotor (11) sont disposées entre les deux bagues collectrices de stator (12) et **en ce que**
- les deux bagues collectrices de stator (12) peuvent être changées de position l'une par rapport à l'autre dans le sens axial.

2. Machine dynamoélectrique selon la revendication 1 **caractérisée en ce que** les zones de contact (19) des deux paires de bagues collectrices sont exécutées de façon concordante, de préférence orientées de façon symétrique l'une par rapport à l'autre.

3. Machine dynamoélectrique selon la revendication 1 ou la revendication 2 **caractérisée en ce que** les bagues collectrices de rotor (11) sont reliées respectivement par un plateau de raccord de rotor métallique (15) au plateau porte-rotor (13).

4. Machine dynamoélectrique selon la revendication 3 **caractérisée en ce qu'**à chaque plateau de raccord de rotor (15) est respectivement relié un raccord (16) s'étendant au moins par secteur pour l'essentiel parallèlement à l'axe de rotor (2).

5. Machine dynamoélectrique selon la revendication 4 **caractérisée en ce que** l'enroulement de rotor (7) est, avec les pinces d'extrémité (18), en contact avec les connexions (16).

6. Machine dynamoélectrique selon l'une quelconque des revendications 1 à 5 **caractérisée en ce qu'**un plateau porte-rotor commun (13) est prévu sur lequel sont disposées les deux bagues collectrices de rotor (11) des deux côtés sur les faces avant opposées l'une à l'autre.

7. Machine dynamoélectrique selon l'une quelconque des revendications 1 à 6 **caractérisée en ce que** les bagues collectrices de rotor (11) et/ou les bagues collectrices de stator (12) sont composées d'un matériau graphite.

8. Machine dynamoélectrique selon la revendication 7 **caractérisée en ce que** les bagues collectrices de rotor (11) et les bagues collectrices de stator (12) sont composées d'un matériau de graphite différent.

9. Machine dynamoélectrique selon l'une quelconque des revendications 1 à 8 **caractérisée en ce que** les zones de contact (19) sont humectées, en particulier en plongeant les bagues collectrices de rotor et/ou les bagues collectrices de stator dans un liquide d'humectation.

10. Machine dynamoélectrique selon l'une quelconque des revendications 1 à 9 **caractérisée en ce que** chaque bague collectrice de stator (12) est reliée de façon fixe avec un plateau porte-stator (21) attribué logé de façon fixe dans un boîtier (22), entourant le montage de bagues collectrices (10).

11. Machine dynamoélectrique selon la revendication 10 **caractérisée en ce que** les bagues collectrices de stator (12) sont reliées respectivement par un plateau de raccord de stator (20) métallique comportant respectivement une connexion (31) au plateau porte stator attribué (21).

12. Machine dynamoélectrique selon la revendication 10 ou la revendication 11 **caractérisée en ce qu'**au moins un des plateaux porte stator (21) est guidé pouvant être axialement mobile dans le boîtier (22).

13. Machine dynamoélectrique selon l'une quelconque des revendications 10 à 12 précédentes **caractérisée en ce qu'**un plateau porte-stator (21) est disposé de façon fixe en position sur le boîtier (22).

14. Machine dynamoélectrique selon la revendication 13 **caractérisée en ce que** les deux bagues collectrices de stator (12) sont axialement précontraintes au moyen d'un agencement à ressort commun (29) contre la bague collectrice de rotor respectivement attribuée (11).

15. Machine dynamoélectrique selon la revendication 14 **caractérisée en ce que** l'agencement à ressort (29) comprend une pluralité de ressorts de compression (30) disposés de façon régulière autour de l'axe de rotor (2).

16. Machine dynamoélectrique selon l'une quelconque des revendications 1 à 15 **caractérisée en ce qu'**une connexion de décharge (32) est disposée sur le boîtier (22) laquelle est reliée à un contact de décharge (36) précontraint élastiquement contre l'arbre de rotor (3) ou un contre-contact (38) disposé sur l'arbre de rotor.

17. Machine dynamoélectrique selon la revendication 16 **caractérisée en ce que** le contact de décharge (36) est appliqué de face dans la zone de l'axe de rotor (2) à l'arbre de rotor (3) ou au contre-contact (38).
